# DEMANDE DE BREVET EUROPEEN

(11) **EP 0 524 099 A1**
(43) Date de publication de la demande: **20.01.1993**
(21) Numéro de dépôt: 92402060.5
(22) Date de dépôt: 16.07.1992
(51) Int. Cl.: G01S 13/93, G01S 13/78

(54) **Procédé et dispositif d'aide à la navigation et d'anti-collision pour aéronef**

(30) Priorité: 19.07.1991 FR 9109193
(71) Demandeur: DASSAULT ELECTRONIQUE, F-92214 Saint-Cloud (FR)
(72) Inventeur: de France, Yves, F-78160 Marly le Roi (FR); Guenneguez, Alain, F-78770 Auteuil-le-Roi (FR)
(74) Mandataire: Plaçais, Jean-Yves

(57) **Abrégé**

Les aides anti-collision pour aéronef (T-CAS) prévoient au sol au moins un radar (1), dit radar secondaire de surveillance, émettant des informations synchronisées d'une part sous forme d'ondes directionnelles avec balayage angulaire, d'autre part sous forme d'ondes omnidirectionnelles. Les deux aéronefs (A, I) sont équipés d'un répondeur actif, réagissant à la réception d'ondes directionnelles du radar en retournant des informations d'identité et d'altitude, également sous forme d'ondes omnidirectionnelles, ainsi que d'un récepteur des ondes reçues du radar et des répondeurs, et de moyens de traitement destinés à fournir des informations sur la position relative des deux aéronefs. Le radar est accompagné d'une balise fixe au sol (B), munie elle aussi d'un répondeur, mais retournant des informations spécifiques de cette balise, telles que son cap et sa distance. Un aéronef (A) équipé détermine d'abord sa distance au radar sur la base du segment radar-balise, défini par les informations de réponse de la balise, puis sa distance à l'autre aéronef, dit "intrus", sur la base du segment radar-aéronef.

## Description

L'invention concerne les moyens électroniques d'aide à la navigation pour aéronef. Elle vise plus particulièrement, quoique non exclusivement des moyens destinés à éviter les collisions entre aéronefs.

Il existe à l'heure actuelle des systèmes anti-collision qui sont soit de type actif (T-CAS versions I, II ou III) ou passif (NAC WS). Ces systèmes sont perfectionnés et de coût élevé. Ceci ne les rend applicables que dans les domaines où un tel coût peut raisonnablement être supporté.

Ils sont articulés sur des radars installés au sol, et dénommés "radars secondaires de surveillance". Cette dénomination les oppose aux radars primaires, qui sont aussi ceux utilisés pour le contrôle aérien dans un système non coopératif.

Un radar secondaire de surveillance est un radar muni d'une part d'une antenne omnidirectionnelle, d'autre part d'une antenne directionnelle, sujette à un balayage angulaire lent, effectué par exemple avec une période de 4 secondes.

Ce radar émet, de façon synchronisée, d'une part des impulsions d'ondes directionnelles (avec balayage angulaire), d'autre part des impulsions d'ondes omnidirectionnelles.

La mise en oeuvre du système suppose que deux aéronefs au moins sont équipés d'un répondeur actif. Ce répondeur réagit à la réception d'impulsions d'ondes directionnelles du radar en retournant des informations d'identité et d'altitude, mais sous forme d'impulsions d'ondes omnidirectionnelles. Bien entendu, en pratique, on équipera ainsi des classes complètes d'aéronefs, par exemple tous les avions de ligne civils.

L'un au moins de ces deux aéronefs (en pratique tous) est équipé d'un récepteur apte à capter non seulement les ondes reçues du radar secondaire de surveillance, mais aussi celles des autres répondeurs. On en déduit alors, par des moyens de traitement appropriés, des informations sur la position relative des deux aéronefs.

Le bon fonctionnement de ce système suppose que l'aéronef où s'effectue le traitement ("aéronef considéré") soit capable de déterminer par ailleurs sa position avec une précision suffisante.

La Demanderesse a observé que tel n'est pas toujours le cas dans l'aviation en général ; en effet le prix d'un système de détermination de position est souvent prohibitif pour les avions de petite taille. La Demanderesse s'est alors posé le problème de permettre néanmoins le bon fonctionnement de systèmes d'aide à la navigation et/ou anti-collision, en l'absence d'un système de détermination de position à bord d'un aéronef.

Le brevet US-A-4 782 450 décrit un moyen utilisable à cet effet. Ce moyen est fondé sur le fait qu'un radar secondaire de surveillance est en principe accompagné d'une balise fixe au sol (maintenant appelée "PARROT", acronyme anglais pour "Position Adjustable Range Reference Orientation Transponder"), munie d'un répondeur opérant comme ceux des aéronefs précités. Après identification du radar secondaire de surveillance et du transpondeur, on accède (base de données) à leurs positions. L'aéronef peut alors se localiser par rapport à eux.

Les moyens proposés sont complexes, et souffrent de différents inconvénients.

La présente invention vient proposer une solution améliorée.

Un but de l'invention est de fournir un tel système qui reste simple, tout en possédant une précision suffisante pour permettre des manoeuvres d'anti-collision de façon fiable.

Un autre but de l'invention est de fournir un système qui, à la base, ne soit pas entièrement dépendant d'informations stockées dans une base de données, dont la mise à jour est toujours délicate.

L'invention a aussi pour but de fournir un système où le lever de doute (d'ambiguïté) soit efficace.

L'invention a encore pour but de fournir un système compatible avec l'évolution des systèmes T-CAS (mode S).

L'une des idées de base de l'invention réside en ceci: on prévoit que la balise retourne en réponse son cap et sa distance au radar (ou des informations qui les représentent, directement ou indirectement), plutôt que l'identité et l'altitude comme c'était le cas jusqu'à présent.

L'aéronef considéré détermine d'abord la vitesse angulaire de balayage du radar. La longueur du segment (au sol) qui joint le radar à la balise est connue (il s'agit de la distance donnée en réponse par la balise). Est également connu un angle relatif à l'orientation dans l'espace de ce segment radar-balise (cap balise ou équivalent). On peut alors déterminer la distance radar/aéronef, et l'orientation dans l'espace de l'axe radar/aéronef.

Ce même aéronef détermine ensuite sa distance à l'autre aéronef, ou "intrus", sur la base du segment radar/aéronef considéré.

Selon un premier aspect de l'invention, la détermination de la distance radar/aéronef comprend :
- la détermination de la vitesse angulaire de balayage du radar secondaire de surveillance,
- la détermination du segment radar/balise, sur la base des indications réémises par la balise, qui donnent la longueur de ce segment (distance radar-balise), et un paramètre relié à son orientation dans l'espace (dit cap balise),
- la détermination de l'orientation (gisement) de l'axe radar/aéronef, d'après le segment radar/balise et ladite vitesse angulaire,
- la comparaison des temps de parcours des ondes d'une part entre le radar secondaire de surveillance et l'aéronef, d'autre part entre le radar et la balise puis entre la balise et l'aéronef, et
- la détermination de la distance radar/aéronef, d'après la différence entre ces deux temps de parcours.

Selon un autre aspect de l'invention, la détermination de la distance aéronef/intrus comprend :
- la détermination de l'axe radar/intrus, d'après le segment radar/aéronef (ou radar-balise) et ladite vitesse angulaire,
- la comparaison des temps de parcours des ondes d'une part entre le radar secondaire de surveillance et l'aéronef, d'autre part entre le radar et l'intrus puis entre l'intrus et l'aéronef, et
- la détermination de la distance aéronef/intrus, d'après la différence entre ces deux temps de parcours.

Le premier aspect de l'invention tel que défini ci-dessus, peut être considéré comme une aide à la navigation. Le second aspect est un pas vers l'aide anti-collision. A cet effet, l'aéronef considéré va effectuer une évaluation du risque de collision, en fonction de la distance entre les deux aéronefs et de leurs altitudes respectives. L'un au moins des deux aéronefs peut alors effectuer une manoeuvre d'évitement par rapport à l'autre, en fonction de critères d'évitement prédéfinis. L'un des avantages de l'invention est que cet évitement peut être envisagé dans le plan horizontal, c'est-à-dire par virage, alors que la plupart des manoeuvres d'évitement de la technique antérieure supposaient un changement d'altitude.

L'invention concerne également les dispositifs permettant la mise en oeuvre du procédé qui vient d'être énoncé.

D'autres caractéristiques et avantages de l'invention apparaîtront à l'examen de la description détaillée ci-après, et des dessins annexés, sur lesquels :
- la figure 1 est un schéma général de mise en oeuvre de la technique selon l'invention, avec un radar secondaire de surveillance, une balise fixe ou PARROT, un avion et un avion "intrus" ;
- la figure 2 est le schéma de principe du dispositif installé à bord d'un aéronef pour la réalisation d'une fonction d'aide à la navigation et d'anti-collision ;
- la figure 3 est un schéma de principe permettant de mieux comprendre les émissions d'un radar secondaire de surveillance ;
- les figures 4 et 5 sont des diagrammes de fonctions impliquées dans la mise en oeuvre de l'invention; et
- la figure 6 illustre schématiquement l'allure des signaux électromagnétiques perçus au niveau d'un répondeur.

Les dessins annexés comportent des éléments de caractère certain qu'ils peuvent seuls représenter. En conséquence ils sont à considérer comme partie intégrante de la description. Ils pourront donc servir non seulement à mieux faire comprendre celle-ci, mais aussi pour compléter la définition de l'invention, le cas échéant.

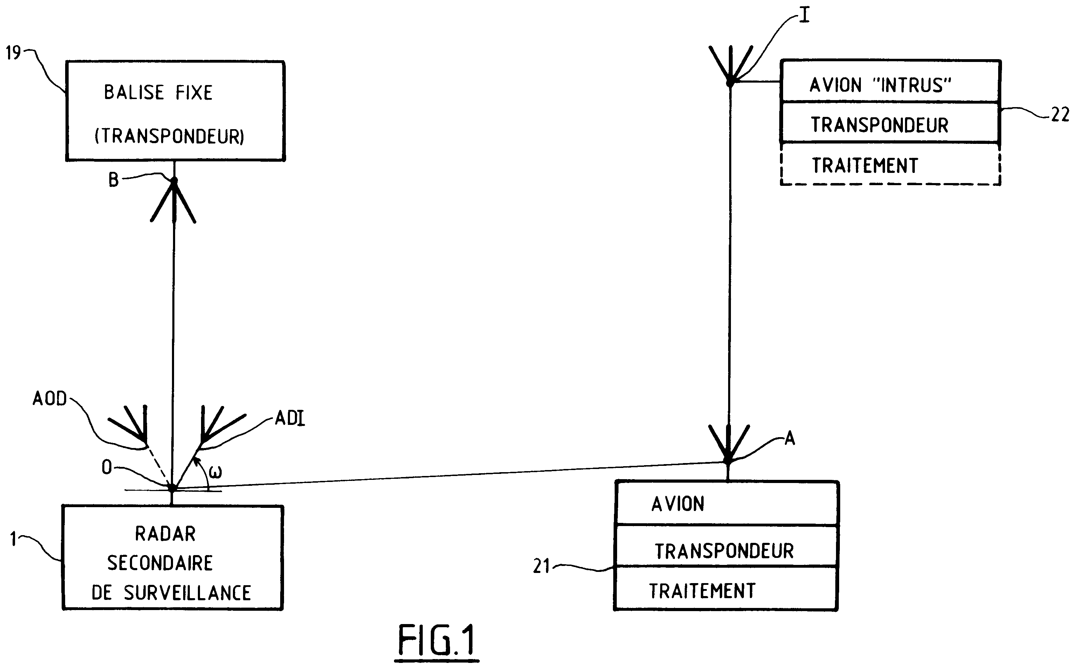

Sur la figure 1, la référence 1 désigne un radar secondaire de surveillance (ou "SSR"). On considère qu'il est placé au point O. Il possède par exemple un aérien omnidirectionnel AOD, et un aérien directionnel ADI, sujet à balayage angulaire avec une vitesse angulaire W correspondant à une période de 4 secondes par exemple (chaque radar a une vitesse angulaire propre, mais fixe, correspondant à une période comprise entre 2 et 12 secondes; le sens de rotation des radars est partout le même).

La figure 1 fait également apparaître deux aéronefs 21 et 22, dont les aériens sont respectivement en position A et I ("intrus"). Ces aéronefs sont tous les deux équipés d'un transpondeur. L'un au moins (21) des aéronefs est également équipé de moyens de traitement, sur lesquels on reviendra plus loin.

Ce qui vient d'être décrit correspond à la base d'un des systèmes dits "TRAFFIC COLLISION AVOIDANCE SYSTEM" ou T-CAS. On distingue plusieurs types de T-CAS, différenciés par des chiffres romains. Cette distinction correspond essentiellement à la nature des manoeuvres d'évitement faites après la détection du risque de collision. Elle n'influe pas sur la nature des moyens de base utilisés.

Par contre, il existe par ailleurs un T-CAS dit "MODE S", où le dialogue entre les éléments de base précités est modifié. Ce mode spécifique sera considéré à nouveau plus loin.

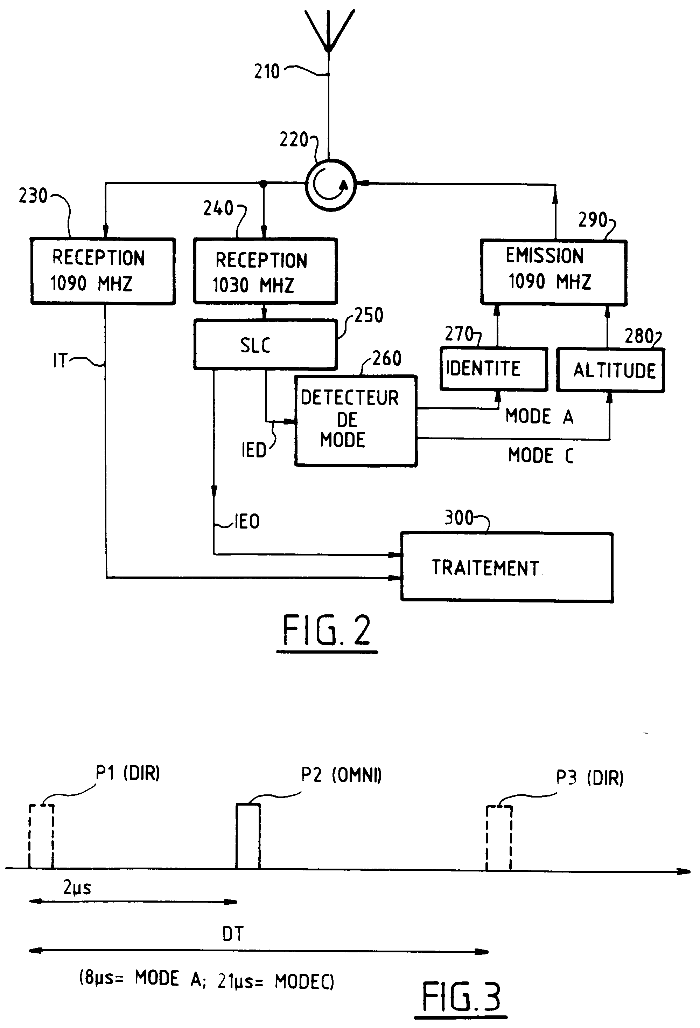

En version de base (modes A et C), les signaux émis sont illustrés schématiquement à la figure 3. Un train de signaux d'émission est constitué d'abord d'une impulsion P1 émise en mode directionnel, et de durée très brève, typiquement 800 nanosecondes. Deux microsecondes plus tard, le radar secondaire de surveillance émet par son antenne omnidirectionnelle AOD une seconde impulsion P2, de même durée que la première. Au bout d'un temps DT, le radar secondaire de surveillance émet une troisième impulsion P3, à nouveau par son aérien directionnel ADI. L'écart temporel entre les impulsions P1 et P3 définit le mode d'interrogation, de la manière suivante :
- si cet écart DT vaut 8 microsecondes, alors l'interrogation est de mode A, et les transpondeurs qui la reçoivent dans la direction concernée doivent répondre en indiquant leur identité ;
- si au contraire DT vaut 21 microsecondes, c'est le mode C, et les transpondeurs doivent répondre en indiquant leur altitude.

Ces modes A et C sont entrelacés, c'est-à-dire que le radar secondaire de surveillance émet alternativement l'un et l'autre. Ces émissions se répètent à une cadence suffisante de façon que, compte tenu de la largeur du lobe principal de l'aérien directionnel ADI, chaque transpondeur soit en mesure de répondre 10 à 20 fois pour un passage donné du faisceau directionnel. La réponse intervient avec un délai fixé.

Il existe aussi un mode 2 (réservé à des applications spéciales) qui est l'équivalent du mode A civil, mais identifié par un intervalle P1-P3 égal à 5 microsecondes.

Par ailleurs, dans le mode de base, les réponses sont codées sur 14 impulsions (au moins), dont 12 correspondent à l'information codée, exprimée en octal, tandis que les deux autres sont des drapeaux indicateurs (F1, F2). Le format temporel de la réponse est donc F1, suivi de 12 bits (au moins), puis F2 pour terminer. L'information codée peut comprendre un 13° bit ou bit X, inutilisé jusqu'à présent.

La figure 2 fait apparaître la structure d'un transpondeur.

L'antenne omnidirectionnelle du transpondeur, référencée 210, est reliée à un circulateur ou autre duplexeur 220, pour alimenter du côté réception, deux étages de réception 230 et 240 opérant respectivement aux fréquence de 1090 et 1030 mégahertz.

La fréquence de 1030 mégahertz, qui est celle sur laquelle opère le radar secondaire de surveillance, est traitée par un circuit de détermination de lobe secondaire 250.

Ce circuit détermine le niveau moyen des impulsions omnidirectionnelles qui sont reçues en permanence par l'étage récepteur 240. Il considère comme impulsions directionnelles celles qui dépassent largement ce niveau moyen. En tout état de cause, le circuit 250 est néanmoins utile, pour éviter que le transpondeur ne réponde à une impulsion d'émission directionnelle qui lui parviendrait par les lobes secondaires de l'aérien du radar secondaire de surveillance 1.

Se trouvent ainsi discriminées les impulsions d'émission omnidirectionnelles IEO, répétitives à une cadence multiple de celles correspondant à la période de balayage angulaire du radar secondaire de surveillance (typiquement 200 Hz).

De temps à autre, on trouve un groupe de 2 impulsions d'émission directionnelle, qui sont alors appliquées à un circuit détecteur de mode 260, mesurant l'écart entre les impulsions de types P1 et P3 telles qu'illustrées sur la figure 3. En 270 et 280, sont inscrites respectivement des informations relatives à l'identité de l'aéronef, et des informations concernant l'altitude mesurée par celui-ci, comme étant la sienne propre. En fonction du fait que le détecteur 260 désigne un mode A ou un mode C, les informations codées d'identité ou d'altitude sont appliquées à un circuit 290 qui réalise l'émission de ces informations, modulant une onde porteuse à 1090 mégahertz, laquelle est transmise à l'antenne 210 par l'intermédiaire du circulateur 220.

Le transpondeur peut également comporter un circuit de traitement 300, qui reçoit toutes les impulsions d'émission omnidirectionnelles IEO, ainsi que la sortie d'un étage de réception séparée 230 à 1090 mégahertz, laquelle va lui fournir les impulsions réémises par des transpondeurs semblables à celui que porte l'aéronef considéré. Ces impulsions sont notées IT.

Les radars secondaires de surveillance déjà existants sont prévus avec une portée de 200 à 400 kilomètres, suivant les pays. Ils sont implantés de façon telle qu'un aéronef soit vu à tout moment par au moins 3 de ces radars. Ce nombre peut être augmenté dans les zones de forte circulation aérienne.

Les systèmes T-CAS sont déjà implantés sur les avions de lignes commerciales, mais du fait du:coût élevé des équipements, ceux-ci ne sont pas adéquats pour des avions légers.

Cette situation est regrettable, d'autant que l'on envisage de rendre obligatoire l'implantation d'un transpondeur de base (sans moyen d'évitement de collision) sur tous les aéronefs.

D'après US-A-4 782 450 (déjà cité), il est proposé un moyen reposant sur le fait qu'à chaque radar secondaire de surveillance 1, il est associé au moins une balise fixe ou PARROT 19 (figure 1) installée au point B du sol, et possédant elle aussi un transpondeur tel qu'illustré sur la figure 2 (en principe sans les étages 230 et 300). Le moyen antérieur est le suivant:
- identifier le radar secondaire (SSR) et sa balise, dont tous les paramètres utiles sont stockés en base de données,
- déterminer et/ou calculer la vitesse angulaire de balayage du radar secondaire,
- tirer des informations de la base de données les positions du radar et de sa balise,
- déterminer dans l'espace la position de l'axe de balayage du radar, en fonction du temps, et par conséquent au moment où il interroge l'aéronef (axe aéronef dans l'espace),
- déterminer un lieu (hyperbolique) de positions possibles de l'aéronef, par rapport aux positions dans l'espace du radar et de la balise, et
- rechercher la position de l'aéronef dans l'espace par l'intersection de l'axe aéronef dans l'espace et du lieu de positions hyperbolique.

Le procédé utilisé dans US-A-4 782 450 est extrêmement complexe pour différentes raisons, notamment:
- pour la mesure des temps "radar" (SSR), il repose sur une discrimination spécifique faisant intervenir des signaux spéciaux dits "ISLS" ("Improved Sidelobe Suppression Signals");
- de nombreux paramètres sont tributaires de bases de données lourdes, dont la mise à jour est délicate, notamment si l'on change la vitesse angulaire de balayage du radar, ses caractéristiques particulières d'émission (chaque radar SSR possède une émission personnalisée), ou encore la position de la balise;
- le lever de doute (ou "résolution d'ambiguïté") est délicat.

La présente invention vient apporter une solution permettant, d'une façon très simple, et économique, de mettre en oeuvre les possibilités d'évitement d'un transpondeur de bord d'aéronef, sans qu'il soit nécessaire d'ajouter à bord aucun moyen de détermination de position, et sans non plus qu'il soit nécessaire de recourir à des méthodes extrêmement complexes de reconnaissance du radar secondaire de surveillance en présence duquel se trouve l'aéronef.

Selon l'invention, le transpondeur de la balise ne va pas répondre par une identité et par une altitude (comme à l'étape 270 de la figure 2 pour les aéronefs), mais par un cap et une distance, exprimés avec une référence qui peut être la position O du radar secondaire de surveillance ou SSR.

Au lieu de l'information d'altitude 280, la balise fixe 19 va répondre en donnant une valeur d'altitude non vraisemblable, qui ne puisse pas être atteinte par un avion. Il est estimé préférable que cette altitude soit très élevée (ou de préférence négative si ces valeurs sont permises), plutôt que l'altitude nulle, le système pouvant servir au sol. On sait ainsi qu'il s'agit d'une balise.

Cette balise va aussi envoyer son éloignement par rapport au radar secondaire de surveillance. Pour ne pas confondre cette valeur avec une altitude, le bit "X" non utilisé (13ème bit sur 12 codés), peut servir à distinguer les réponses des balises PARROT de celles des avions.

Les informations de cap et de distance ainsi réémises 420 par la balise peuvent fournir implicitement un premier résultat : si l'on prend soin de faire en sorte que, au moins dans une région du monde donnée, il n'existe pas deux balises possédant le même cap et la même distance par rapport à leur radar secondaire de surveillance (orientation dans l'espace et longueur du segment radar-balise), alors la connaissance du cap et de la distance de la balise par rapport au radar secondaire de surveillance définit complètement la position du radar secondaire de surveillance, dès lors que l'on dispose d'une base de données extrêmement simple constituée en conséquence.

En pratique, les radars secondaires de surveillance existants sont déjà équipés de balises fixes utilisées à des fins de calibration et de test. Ces balises peuvent servir à la mise en oeuvre de l'invention, dès lors que leur cap et leur distance vis-à-vis du radar secondaire de surveillance satisfont la condition précitée, et sous réserve bien entendu de modifier ces balises pour leur faire réémettre leur cap et leur distance vis-à-vis du radar secondaire de surveillance auquel elles sont associées. Si, pour des raisons pratiques, les informations réémises par ces balises ne représentaient pas les valeurs attendues, cap et distance, ces informations pourraient alors être recherchées dans une base de données plus conséquente.

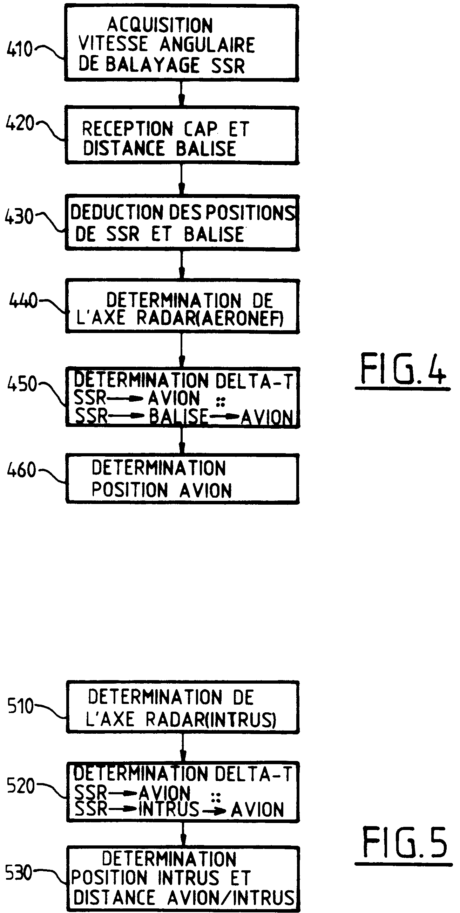

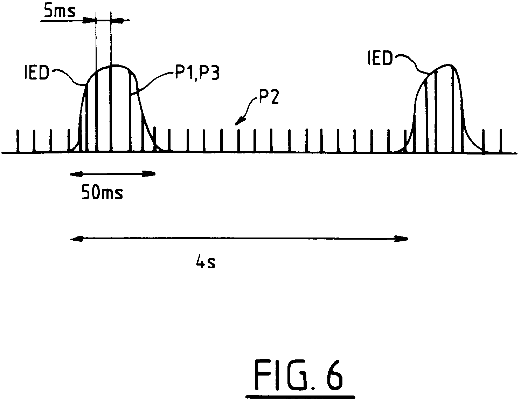

La première étape du procédé ici proposé (410, figure 4) consiste à mesurer la vitesse angulaire de balayage du radar secondaire de surveillance, d'après le temps séparant deux trains d'impulsions d'émission directionnelle IED consécutives (voir figure 6). Le temps nécessaire pour cette mesure est d'au moins une période de balayage soit 4 secondes. Par la suite, la précision de la mesure peut être affinée.

Si l'on revient à la figure 2, les émissions de la balise arrivent par l'étage de réception 230. Leur décodage au niveau du circuit de traitement 300 fournit les informations de cap et de distance de la balise fixe en question, par rapport au SSR.

La recherche de ces informations 430 (figure 4) dans la base de données déjà mentionnée fournit d'une part la position absolue du radar secondaire de surveillance considéré (si nécessaire), d'autre part celle de la balise, puisque son cap et sa distance vis-à-vis du radar secondaire de surveillance sont complètement définis par les informations reçues. Comme déjà indiqué, le fait qu'il s'agit d'une balise est clairement établi par le côté invraisemblable de l'altitude affichée par celle-ci (par exemple).

On connaît la vitesse angulaire de balayage du radar secondaire de surveillance (ou SSR), ainsi que la longueur et l'orientation du segment radar/balise. En outre, l'aéronef considéré peut, à partir des impulsions d'émission directionnelles qu'il reçoit, déterminer la position angulaire de l'aérien directionnel ADI du SSR au moment de l'émission correspondante. Ceci définit l'angle orienté entre les directions radar-balise et radar-aéronef. D'où la détermination (440) de l'orientation (gisement) de l'axe qui joint le radar secondaire de surveillance à l'aéronef.

Par ailleurs, l'aéronef considéré a capté en outre les temps d'arrivée des impulsions provenant du transpondeur de la balise 19. Il est en mesure d'identifier les impulsions d'émission IED correspondantes en direction de cette balise 19 (d'après le temps auquel il a reçu une impulsion d'émission omnidirectionnelle IEO ou P2 associée). Il peut donc mesurer la différence des temps de parcours des ondes d'une part entre lui-même, directement, et le radar secondaire de surveillance, d'autre part entre le radar et la balise puis entre la balise et lui-même. Ces mesures s'effectuent entre les impulsions d'émission telles que P2 et le début d'une réponse, à savoir le bit de drapeau F1; elles sont de préférence réalisées sur les fronts de montée, et corrigées des temporisations internes (P2-F1). Ces différences de temps de parcours définissent des lieux de position hyperboliques, comme le sait l'homme de métier (450).

L'intersection de l'une des branches de l'hyperbole avec l'axe radar-aéronef permet la détermination de la position de l'aéronef dans l'espace 460. En outre, le sens de rotation de balayage des SSR est toujours le même; et l'on connaît l'angle orienté balise-radar-aéronef. D'où une simplification substantielle du lever de doute: il n'existe qu'une solution correcte.

Apparaît ici un premier avantage important de l'invention : à l'aide du seul système proposé, l'aéronef peut tout d'abord déterminer sa propre position par rapport au SSR, et ce sans être équipé d'un dispositif complexe prévu à cet effet à l'heure actuelle. L'aéronef détermine sa position dans l'espace, si la position du SSR est connue par interrogation de la base de données simple précitée.

On examinera maintenant comment l'aéronef considéré peut détecter la présence, en son voisinage, d'un autre aéronef, qualifié ici d'intrus (figure 5).

La première opération 510 comprend la détermination de l'axe radar-intrus. Le moyen utilisé est le même que précédemment, c'est-à-dire partir d'un axe déjà déterminé (par rapport au radar), et voir quelle est celles des impulsions d'émission directionnelles à laquelle l'intrus répond, d'où un décalage angulaire. Ceci peut se faire soit d'après le segment radar/aéronef, soit d'après le segment radar/balise.

La seconde opération 520 consiste à nouveau en une détermination de différence de temps de parcours. Cette fois, on considère d'un côté le temps de parcours des ondes entre le radar secondaire de surveillance et l'aéronef considéré, directement ; d'autre part, on considère le temps de parcours des ondes entre le radar et l'intrus puis entre l'intrus et l'aéronef. Comme précédemment, l'impulsion de réponse du transpondeur de l'intrus est perçue dans le récepteur 230. On lui associe la plus proche en amont des impulsions d'émission omnidirectionnelles IEO. La différence de temps entre ces deux impulsions, corrigée de leur différence de temps à l'émission (l'une provient de l'impulsion P2 du SSR, l'autre de l'impulsion F1 de l'avion intrus) permet d'accéder directement à la différence de temps de parcours recherchée.

Après cela, il suffit une nouvelle fois de déterminer une intersection entre l'axe et un lieu de position (ellipse) pour connaître la position de l'intrus par rapport au radar, et en déduire la distance de l'aéronef à l'intrus (530).

L'homme de métier appréciera que l'invention repose sur des bases techniques sophistiquées. Cependant, les moyens à mettre en oeuvre demeurent relativement simples.

L'acquisition de la vitesse angulaire de balayage du radar secondaire de surveillance SSR est une opération classiquement déjà effectuée dans les dispositifs de traitement, et techniquement simple. Il en est de même pour la réception des informations portées par les réponses des transpondeurs, qu'il s'agisse du cap et de la distance (ainsi que d'une fausse altitude) dans le cas de la balise, ou bien de l'identité et de l'altitude (s'agissant d'un intrus ; il est d'ailleurs à remarquer que ces informations ne sont pas directement nécessaires pour la détection proprement dite de l'intrus).

La détermination des axes se réduit à une simple mesure d'écart temporel, avec multiplication par la vitesse angulaire.

Les déterminations d'écart temporel entre deux trajets sont des choses également connues, de même que la déduction de la position de l'avion ou de la distance entre l'avion et l'intrus, suivant le cas.

La Demanderesse a observé qu'il est possible d'obtenir avec les moyens proposés une précision de mieux que 1 degré sur la mesure de la vitesse angulaire de l'antenne directionnelle du SSR.

Si on admet qu'en pratique, un aéronef pourra toujours effectuer plusieurs mesures par rapport à plusieurs SSR, avec des recoupements de référentiels, la précision que l'on peut obtenir sur les mesures angulaires d'axes est de l'ordre de 0,5 degré angulaire.

On peut alors déterminer une position ou un intrus à 200 mètres près en distance, et à 1 degré près en cap, pour un avion qui se trouverait éloigné de 100 kilomètres de la base de mesure, la base de mesure étant constituée du SSR et de sa balise fixe associée (ou PARROT).

Un avantage important de l'invention est que cette précision augmente lorsqu'on se rapproche de la base de mesure, pour être de l'ordre de 50 mètres à 10 kilomètres de celle-ci. Ceci est tout à fait favorable, car on observe généralement des densités plus élevées d'aéronefs à l'approche d'un aérodrome.

Le spécialiste observera par ailleurs que les mesures effectuées sont différentes de celles réalisées dans les systèmes déjà connus T-CAS II ou III. Il apparaît en effet que la précision en cap obtenue selon l'invention est au moins dix fois meilleure.

Une conséquence intéressante en découle : dès lors que l'on dispose d'une bien meilleure précision en cap, il devient possible de réaliser une manoeuvre d'évitement dans le plan, c'est-à-dire sans changer d'altitude, plutôt que de changer d'altitude comme le prévoient les manoeuvres d'évitement du T-CAS II par exemple. Cet aspect est important, car les manoeuvres avec changement d'altitude sont toujours plus délicates.

Bien entendu, le système proposé a vocation à déterminer non seulement la distance de l'aéronef à l'intrus, mais également à réaliser une poursuite de celle-ci, avec rafraîchissement toutes les 4 secondes (la période angulaire du SSR). On perçoit non seulement la position de l'intrus, mais aussi son altitude, qu'il indique dans les informations réémises. Il est donc possible d'établir une évaluation du risque de collision, et de réaliser une manoeuvre d'évitement, par exemple par virage, au niveau de l'un au moins des deux aéronefs considérés.

L'aéronef est avantageusement équipé de moyens pour recaler angulairement en permanence les informations dont il dispose, par rapport à ses propres variations de cap.

En pratique, la mise en oeuvre de l'invention suppose :
- que l'on ajoute une balise fixe pour chaque SSR, ou que l'on équipe convenablement les balises de calibration et d'auto-test prévues avec ceux-ci, ou que leurs informations soient répertoriées dans une base de données,
- que le récepteur du transpondeur de base soit rendu bifréquence, et qu'on lui ajoute les moyens de traitement définis plus haut.

L'homme de métier comprendra que l'invention ne repose pas, pour son fonctionnement, sur une base de données embarquée (même s'il peut être utile d'en avoir une). En conséquence, des changements effectués au niveau du radar ou de la balise (vitesse angulaire du radar, position, par exemple) peuvent être immédiatement pris en compte: il suffit de modifier l'émission de la balise, le cas échéant.

De plus, l'utilisation des impulsions P2 pour la mise en oeuvre de l'invention est avantageuse.

On peut d'abord mémoriser la période de répétition et la phase des impulsions P2. Dans les radars modernes, le même aérien plat tournant est utilisé pour engendrer à la fois les impulsions directionnelles et omnidirectionnelles (à l'aide de techniques dites "formation de faisceau"). Il existe alors un angle mort dans le plan de l'aérien. D'où un évanouissement possible de l'impulsion P2 pour un aéronef qui se trouverait dans ce plan. La "mémoire" permet de fonctionner malgré l'impulsion P2 manquante.

En outre, l'invention assure une bonne compatibilité avec différentes variantes des modes A/C, au niveau de la personnalisation des émissions des SSR (par exemple la "wobbulation", qui implique de légères variations de la période de répétition des impulsions du radar SSR), ainsi qu'une compatibilité ascendante avec le mode S, comme on le verra ci-après.

La personnalisation des SSR utilise:
- leur vitesse angulaire de balayage;
- leur fréquence ou période d'interrogation, à laquelle correspond la période des impulsions P2 (y compris en réception, sauf évanouissement);
- la "wobbulation" de celle-ci, qui est caractéristique du SSR; cette wobbulation comporte une périodicité globale exactement égale à la valeur nominale de la période ou fréquence de répétition des interrogations, sur des groupes consécutifs d'un nombre choisi d'interrogations (environ 3 à 6); par contre, à l'intérieur de chaque groupe, les impulsions (bloc P1,P2,P3) sont légèrement décalées (quelques dizaines de microsecondes) par rapport à la périodicité exacte, selon un motif prédéfini;
- le mode de travail du SSR (A/C, S).

La mémoire précitée permet également de tenir compte d'une telle wobbulation.

Ce qui a été décrit jusqu'à présent concerne les modes A et C. On considère maintenant le mode S.

Dans ce mode, les impulsions P1 et P2 sont conservées, mais toutes deux sont émises directionnellement. Après celles-ci, il est émis une impulsion P6 (troisième catégorie d'impulsions d'émission directionnelles), modulée par inversion de phase selon un code numérique, avec un préambule propre à permettre la synchronisation d'une boucle à verrouillage de phase. Le code numérique utilise 56 ou 112 bits, avec parmi ceux-ci une partie "adresse" qui représente 24 bits. L'adresse est un code d'identification unique d'un avion particulier, ou bien d'un autre émetteur, (radar secondaire de surveillance, balise). Les transpondeurs répondent sur un format analogue, mais seulement aux interrogations qui visent leur adresse propre.

Peu après le début de l'impulsion P6, et séparément, il est émis une impulsion P5 omnidirectionnelle.

Enfin, il est prévu un mode spécial, qui est un aménagement des modes A/C et peut servir d'appel général en mode S:
- les impulsions P1 et P3 (directionnelles), ainsi que P2 (cette fois omnidirectionnelle) sont émises comme en mode A/C.
- elles sont suivies d'une impulsion P4, qui peut avoir deux durées. La durée courte interdit aux transpondeurs mode S de répondre; la durée longue est un "appel général" dit ALL-CALL, réservé au mode S.

Ceci permet d'éviter les collisions (radio) entre les réponses de différents aéronefs qui se situeraient dans la même direction par rapport au SSR.

La procédure du mode S est la suivante :
- "interrogations générales (ALL-CALL)" ; un aéronef ne répond à une telle interrogation qu'avec un tirage au sort, par exemple 1 fois sur 10, en tous cas non systématiquement, et sous d'autres conditions précisées ci-après; ainsi, le SSR "apprend" l'adresse de tout aéronef entrant dans sa zone d'action.
- Le SSR émet d'autres interrogations "adressées", c'est-à-dire dirigées directement sur l'un des aéronefs ayant répondu.
- ensuite, l'aéronef est interdit temporairement de réponse à un appel général, la temporisation étant comptée à partir du plus récent appel général auquel il a répondu, ou de toute interrogation sélective plus récente qu'il aura reçue (les conditions précitées).

Cette procédure permet très rapidement la résolution d'éventuelles collisions entre différentes réponses.

L'invention peut naturellement s'étendre à ce mode dit S. En effet, l'homme de métier comprendra que ce qui a été décrit plus haut s'y trouve directement applicable, et plus facilement du fait de l'adressage sélectif. Il suffit d'utiliser les impulsions P5 en mode S (adressé), ou les impulsions P2 dans les autres cas.

En outre, si on le souhaite, au lieu d'identifier le radar secondaire de surveillance d'après la balise fixe au sol qui lui est associée, il devient aussi possible d'identifier directement le radar secondaire de surveillance d'après sa propre "adresse" en mode S.

Par ailleurs, à partir du moment où il devient systématiquement obligatoire d'équiper tous les aéronefs d'un transpondeur, il est également possible de résoudre un autre problème. C'est le cas d'un aéroport en situation de brouillard, où les observations sont difficiles depuis la tour de contrôle. Celle-ci est alors munie du même système que l'aéronef "considéré" tel qu'on l'a décrit plus haut. Par ce moyen, il devient possible à la tour de contrôle de déterminer avec une bonne précision la position de tous les aéronefs présents sur l'aéroport et autour de celui-ci.

Par un lissage logiciel de la situation, les avions à l'arrêt sont "oubliés" même si leurs transpondeurs sont en fonctionnement. Les avions se situant derrière des masques (hangar, bâtiment) ne seront pas vus.

Un synoptique représentant la topographie aéroportuaire permettra de situer les aéronefs en mouvement sur les différentes voies (Taxi way) ou pistes, et ainsi de pouvoir contrôler à 30 mètres près la position des avions en roulement, en approche et au décollage.

## Revendications

1. Procédé d'aide anti-collision pour aéronef, dans lequel
- on prévoit au sol au moins un radar (1), dit radar secondaire de surveillance, émettant des informations synchronisées d'une part sous forme d'ondes directionnelles avec balayage angulaire, d'autre part sous forme d'ondes omnidirectionnelles,
- on équipe au moins deux aéronefs (A, I) d'un répondeur actif, réagissant à la réception d'ondes directionnelles du radar en retournant des informations d'identité et d'altitude, également sous forme d'ondes omnidirectionnelles,
- on équipe au moins l'un (A) de ces deux aéronefs d'un récepteur des ondes reçues du radar et des répondeurs, et de moyens de traitement destinés à fournir des informations sur la position relative des deux aéronefs,
- on associe au radar au moins une balise fixe au sol (B), munie d'un répondeur opérant comme ceux desdits aéronefs,
- ledit aéronef (A) équipé détermine d'abord sa distance au radar sur la base du segment radar-balise, puis sa distance à l'autre aéronef, dit "intrus", sur la base du segment radar-aéronef,
caractérisé par le fait que ladite balise fixe retourne des informations omnidirectionnelles spécifiques représentatives de son cap et de sa distance au radar,
ce qui facilite la détermination du segment radar-balise par ledit aéronef.

2. Procédé selon la revendication 1, caractérisé en ce que la détermination de la distance radar/aéronef comprend:
- la détermination (410) de la vitesse angulaire de balayage du radar secondaire de surveillance,
- la détermination (420) du segment radar-balise, sur la base desdites informations spécifiques réémises par la balise,
- la détermination (440) de l'axe radar/aéronef, d'après le segment radar/balise et ladite vitesse angulaire,
- la comparaison (450) des temps de parcours des ondes d'une part entre le radar secondaire de surveillance et l'aéronef, d'autre part entre le radar et la balise, puis entre la balise et l'aéronef, et
- la détermination (460) de la position de l'aéronef sur l'axe radar/aéronef, d'après la différence entre ces deux temps de parcours.

3. Procédé selon la revendication 2, caractérisé en ce que la détermination de la distance aéronef/intrus comprend:
- la détermination (510) de l'axe radai/intrus, d'après le segment radar/aéronef et ladite vitesse angulaire,
- la comparaison (520) des temps de parcours des ondes d'une part entre le radar secondaire de surveillance et l'aéronef, d'autre part entre le radar et l'intrus, puis entre l'intrus et l'aéronef, et
- la détermination (530) de la distance aéronef/intrus, d'après la différence entre ces deux temps de parcours.

4. Procédé selon l'une des revendications 1 à 3, caractérisé en ce que la détermination (420) du segment radar-balise comprend la détermination (430) des positions absolues du radar et de la balise, sur la base desdites informations spécifiques réémises par la balise.

5. Procédé selon l'une des revendications 1 à 4, caractérisé en ce que la détermination (450;520) de temps de parcours des ondes s'effectue avec pour point origine les impulsions sensiblement périodiques et omnidirectionnelles (P2), et pour point d'extrémité la réception du début d'une réponse (F1).

6. Procédé selon l'une des revendications précédentes, caractérisé en ce que l'un au moins (A) des deux aéronefs effectue une évaluation de risque de collision en fonction de la distance entre les deux aéronefs et de leurs altitudes respectives.

7. Procédé selon la revendication 6, caractérisé en ce que l'un au moins (A) des deux aéronefs effectue une manoeuvre d'évitement par rapport à l'autre, en fonction de critères d'évitement prédéfinis.

8. Procédé selon la revendication 7, caractérisé en ce que ladite manoeuvre d'évitement est réalisable dans le plan, sensiblement sans changer d'altitude.

9. Dispositif embarqué d'aide anti-collision pour aéronef, du type comprenant un récepteur/transpondeur bi-fréquence pour radar secondaire de surveillance, récepteur associé à des moyens de traitement propres à déterminer la vitesse angulaire de balayage du radar et à détecter les réponses d'autres transpondeurs, tandis que ces moyens de traitement (300) sont agencés pour détecter la réponse d'une balise fixe, en déduire (410-430) des indications relatives au segment radar/balise, puis déterminer (440) l'axe radar/aéronef, d'après le segment radar/balise et ladite vitesse angulaire de balayage du radar, ensuite comparer (450) les temps de parcours des ondes d'une part entre le radar secondaire de surveillance et l'aéronef, d'autre part entre le radar et la balise, puis entre la balise et l'aéronef, et enfin déterminer (460) la position de l'aéronef sur l'axe radar/aéronef, d'après la différence entre ces deux temps de parcours,
caractérisé par le fait que, ladite balise fixe retournant des informations omnidirectionnelles spécifiques représentatives de son cap et de sa distance au radar, les moyens de traitement (300) déterminent la distance radar/aéronef et l'axe radar/aéronef à partir de ces informations transmises de cap et de distance de la balise par rapport au radar secondaire de surveillance auquel elle est associée.

10. Dispositif selon la revendication 9, caractérisé en ce que les moyens de traitement sont en outre agencés pour déterminer (510) l'axe radar/intrus, d'après le segment radar/aéronef et ladite vitesse angulaire, comparer (520) les temps de parcours des ondes d'une part entre le radar secondaire de surveillance et l'aéronef, d'autre part entre le radar et l'intrus, puis entre l'intrus et l'aéronef, et déterminer (530) la distance aéronef/intrus d'après la différence entre ces deux temps de parcours.
